Europäisches Patentamt

**European Patent Office**

**Office européen des brevets**

(11) Publication number: **0 193 244**
**A2**

# EUROPEAN PATENT APPLICATION

(21) Application number: **86200271.4**

(22) Date of filing: **21.02.86**

(51) Int. Cl.⁴: **H 04 Q 1/38**
**H 04 M 19/00**

(30) Priority: **28.02.85 BE 901837**

(43) Date of publication of application:
**03.09.86 Bulletin 86/36**

(84) Designated Contracting States:
**AT BE CH DE FR GB IT LI LU NL SE**

(71) Applicant: **BELL TELEPHONE MANUFACTURING COMPANY Naamloze Vennootschap**
**Francis Wellesplein 1**
**B-2000 Antwerp(BE)**

(84) Designated Contracting States:
**BE LU NL**

(71) Applicant: **International Standard Electric Corporation**
**320 Park Avenue**
**New York New York 10022(US)**

(84) Designated Contracting States:
**CH DE FR GB IT LI SE AT**

(72) Inventor: Pieters, Jozef Frans Pharida
Kloosterstraat 10
B-9380 Lebbeke-Wieze(BE)

(72) Inventor: Beckers, Stéphan Theo Marthe
Haverblok 45
B-2670 Puurs(BE)

(74) Representative: Vermeersch, Robert et al,
BELL TELEPHONE MANUFACTURING COMPANY
Naamloze Vennootschap Patent Department Francis
Wellesplein 1
B-2018 Antwerp(BE)

(54) Polarity reversal circuit.

(57) Polarity reversal circuit including a differential amplifier (T1/4) and a signal source able to apply a constant voltage and a gradually varying voltage to respective inputs of the amplifier each via the series connection of the gate-to-source path of a field effect transistor (NM2/3), the base-emitter function of a bipolar transistor (T7/8) and a resistance (R14/18) constituting together with another resistance (R15/19) a voltage divider connected to a temperature independent reference voltage (VREF).

EP 0 193 244 A2

./...

- 1 -

## POLARITY REVERSAL CIRCUIT

The present invention relates to a polarity reversal circuit, e.g. for reversing the polarity of first and second line conductors of a telecommunication line, including at least one differential amplifier circuit with first and second intercoupled amplifiers having a common bias circuit as well as first and second inputs, and a signal source able to apply a constant first voltage to said first input and a gradually varying second voltage to said second input via at least the gate-to-source path of a first and a second field effect transistor respectively in order to reverse the polarity of the output signal supplied by the differential amplifier.

Such a polarity reversal circuit adapted to realise smooth reversals is already known from the Belgian patent N° 898 051. In this known circuit the source electrode of each of the first and second field effect transistors is directly connected to the first and second inputs of the differential amplifier respectively and also to a supply voltage via the drain-to-source path of a respective other field effect transistor, both the latter transistors being coupled in current mirror configuration with a same constant current source. The second input voltage varies exponentionally over a total range of four diode voltages on both sides of the constant first voltage.

It is known that field effect transistors have poor matching characteristics. More particularly, the above first and second field effect transistors may have different threshold voltages. When this difference is relatively large with respect to the first input voltage and to the range of variation of the second input voltage which are both relatively small, the operational symmetry and therefore also the accuracy of operation of the differential amplifier is adversely affected.

Also the above mentioned other field effect transistors may have different threshold voltages and in this case different currents are sunk into the supply voltage through these other transistors as well as through the first and second field effect transistors. To enable such a flow of different currents in these first and second transistors, different gate-to-source voltages have to be applied to them. This again adversely affects the operational symmetry and accuracy of the differential amplifier.

To be noted that the values of the threshold voltages also depend on temperature so that temperature variations might also have an adverse effect on the differential amplifier.

An object of the present invention is to provide a polarity reversal circuit of the above type, but with an increased operational accuracy when compared with the known art.

According to the invention this object is achieved due to the fact that the source electrodes of said first and second field effect transistors are coupled to a common reference voltage via the base-emitter junction of a respective bipolar transistor emitter follower, each in series with a respective emitter resistance a tapping point of which is connected to a respective input of said differential amplifier.

Assuming that the voltages finally applied to the inputs of the differential amplifier are the same as in the prior art circuit, it is clear that due to the voltage division the above mentioned first and second input voltages may be considerably larger than those appearing at the amplifier inputs because the latter are only fractions of the former. As a consequence the influence of the first and second field effect transistors, which may have different threshold voltages, on the operational accuracy of the differential amplifier is correspondingly reduced.

Because of the presence of the bipolar emitter follower transistors the currents to be supplied by the first and second field effect transistors are both small so that also the difference between these currents is small in case there is a mismatch between these transistors. As a consequence the gate-to-source voltages required to allow the flow of these currents are small too and the same is true for their difference. Thus the operational accuracy of the differential amplifier is further increased, even in case of temperature variations.

Another characteristic feature of the present polarity reversal circuit is that it further includes a reference voltage circuit which provides said common reference voltage at its output terminal and includes a first resistive voltage divider whose resistance is connected between supply voltages and a tapping point of which is connected to said output terminal via the series connection of the base-emitter junction of third and fourth bipolar transistors of opposite conductivity type.

In this way the substantially equal and temperature dependent saturation voltages VBE of the third and fourth bipolar transistors subtract from each other, so that the temperature dependency of the reference voltage is only function of the supply voltages. But these supply voltages are substantially independent from temperature because they are usually provided by a signal source maintained at a substantially constant temperature.

Still another characteristic feature of the present polarity reversal circuit is that said signal source includes a capacitance and associated controlled second and third constant current sources allowing said capacitance to be discharged and charged between respective supply voltages, said variable second voltage being generated at the junction point of
said capacitance and said second and third constant current
sources.

Because the capacitance is thus charged or discharged in a linear way the time to perform this operation is a
minimum when compared with the prior art circuit wherein a
capacitance is exponentially charged or discharged. The linear operation contributes to the operational symmetry and
accuracy of the differential amplifier circuit, whilst the
reduced operation time allows an increased number of smooth
polarity reversals to be performed within a predetermined
time interval. This feature may be required in a telecommunication system wherein coin boxes are used and wherein
coins have to be collected at a relatively high speed by successive polarity reversals without producing clicks on this
line.

The above mentioned and other objects and features
of the invention will become more apparent and the invention
itself will be best understood by referring to the following
description of an embodiment taken in conjunction with the
accompanying drawing which represents part of a telecommunication Subscriber Line Interface Circuit (SLIC) including a
polarity reversal circuit according to the invention.

Reference is made to the following Belgian patents
Nos :
A) 898 049  disclosing various
details of a SLIC;
B) 898 050  concerning a circuit
used in a SLIC for sensing the speech/metering current
flowing in a telecommunication line;
C) 898 051 disclosing a DC
bias control circuit for operational amplifiers of a SLIC
as well as a polarity reversal circuit, for a telecommunication line, similar to the one according to the present invention;

D) 898 052 concerning an AC bias control circuit for operational amplifiers of a SLIC.

The SLIC shown operates with the following supply voltages :

V+ which is at ground potential;

V- which is at -48 or -60 Volts;

VAUX which is an auxiliary voltage 15 volts above V-;

VAG which is a voltage , half-way      between V- and VAUX i.e. of about 7.5 Volts  above V-;

B1 which is a constant voltage;

VEET which is a regulated voltage.

A  not shown signal source provides binary control signals VPB, $\overline{VPB}$ and BR, $\overline{BR}$.

The SLIC shown forms part of a line circuit connected in a telecommunication exchange between a switching network (not shown) and one end of a telecommunication line with conductors LI0 and LI1.  The other end of this line is connected to a subscriber set TSS including a normally open hook switch HS.  The SLIC includes two operational line amplifiers LOA0 and LOA1 which are each fed between V+ and VEET which is a regulated voltage obtained in the way described in the above mentioned reference A.  Amplifiers LOA0 and LOA1 have tip and ring outputs TP and RG which are coupled, on the one hand, to the respective line conductors LI0 and LI1 via corresponding feed resistors R0 and R1 of equal value and, on the other hand, to their respective inverting inputs TAC and RAC through respective feedback resistors R2 and R3 also having the same value.  The  inputs TAC and RDC of LOA0 and LOA1 are connected to a common control terminal VFB via respective resistors R4 and R5 of equal value.  Their inputs TDC and RAC --------------_____ are connected to a common terminal SMI through respective resistors R6 and R7, again of equal value.  A common control terminal VX is further connected to non-inverting input terminal TDC via resistor R8, buffer BUF1 and resistor R10 in series, as well as to non-inverting input terminal RDC via resistor R9, buffer BUF2 and resistor R11 in series.

Preferred values of the resistors R0 and R11 are :

R0, R1                 : 50 ohms;

R2, R3, R10, R11 : 150 kilo-ohms;

R4, R5, R6, R7    : 60 kilo-ohms;

R8, R9                 : 300 kilo-ohms.

The feed resistors R0  and R1 form part of a loop current sensing circuit (not shown) of the type described in reference B.  This circuit generates at its output constituted by the above common terminal VFB a like named output signal VFB which is proportional to the AC part of the loop current, i.e. to the speech and/or metering current.  As a consequence this signal VFB is applied to the  inputs TAC and RDC of LOA0 and LOA1 respectively.

As described in reference A a speech signal and/or a metering signal both received from the exchange are combined so as to generate a received speech/metering signal SMI at the above common terminal SMI.  As a consequence the signal SMI is applied to the  inputs TDC and RAC of LOA0 and LOA1 respectively.

In a way similar to the one disclosed in reference C a DC bias voltage VX is generated at the above common terminal VX.  This bias voltage which is now equal to (V+)- v, wherein v is constituted by a fixed voltage on which is superposed a voltage proportional to the amplitude of the metering signal, is applied to the non-inverting inputs TDC and RDC of LOA0 and LOA1 respectively.

The SLIC further includes circuitry described hereinafter which is able to apply suitable DC voltages to the non-inverting inputs TDC and RDC of the amplifiers LOA0 and LOA1 in order that the latter should apply voltages (V+)- v to LI0 and VEET + v to LI1 or vice-versa, or apply VEET + v to both LI0 and LI1.  This circuitry is also adapted to realise polarity reversals i.e. to simultaneously change the voltages on lines LI0 and LI1 from (V+) - v to VEET + v and from VEET + v to (V+) - v respectively or vice-versa.  This happens in a smooth way similar to the one described in the above given reference C or in a more abrupt manner.

The circuitry includes a differential amplifier circuit with amplifiers T1, T2 and T3, T4 having a common bias current source T5, T6. This amplifier circuit has signal inputs TP1 and TP2, a reference voltage input VREF, control voltage inputs VPA and VPB and outputs BR1 and BR2 connected to the junction points of R9 and BUF2 and of R8 and BUF1 respectively. Each of the amplifiers T1, T2 and T3, T4 is constituted by a pair of NPN transistors which are interconnected in a Darlington configuration. More particularly, the amplifier signal inputs TP1 and TP2 are connected to the common constant current source T5, T6 via the base-emitter junctions of the bipolar NPN transistors T1, T2 and T3, T4 respectively. The collectors of T1, T2 as well as of T3, T4 are connected to the respective output terminals BR1 and BR2, whilst the bases of T1 and T3 are connected to the amplifier signal inputs TP1 and TP2 respectively. The commoned emitters of the transistors T2 and T4 are connected to the interconnected collectors of both the bipolar emitter follower NPN transistors T5 and T6 included in constant current branches of a constant current source. This constant current source is not fully shown but is similar to the one disclosed in the above reference C, except for the fact that it includes bipolar transistors instead of MOS transistors. More particularly, the emitters of transistors T5 and T6 are connected to V- via the emitter resistors R12 and R13 of equal value and the base of T5 is connected to the base of T6 via the drain-to-source path of NMOS transistor NM1 whose gate is connected to a control terminal VPB. This terminal is also connected to the gate of PMOS transistor PM1 whose source-to-drain path shunts the series connection of the base-emitter junction of T6 and resistor R13. The constant current able to be generated in the collector of each of the transistors T5 and T6 by this bias constant current source is called I1.

A signal source associated to the amplifier inputs is able to apply a constant voltage and a linearly varying voltage to the signal inputs TP1 and TP2 of the above differential amplifier respectively. This signal source includes a resistive voltage divider comprising resistors R14 and R15 which are connected in series between the emitter of emitter follower NPN transistor T7 and the reference voltage VREF and which have a tapping point TP1 connected to the like named input TP1 of the amplifier T1, T2. Transistor T7 is connected in a Darlington configuration with NMOS transistor NM2 between the tapping point TP3 of a resistive voltage divider, comprising resistors R16 and R17 connected between VAUX and VAG, and the upper end of resistor R14.

The amplifier signal input TP2 is connected to the like named tapping point of a resistive voltage divider which also forms part of the signal source and comprises resistors R18 and R19 connected in series between the emitter of emitter follower NPN transistor T8 and the reference voltage VREF. The latter transistor T8 is connected in a Darlington configuration with NMOS transistor NM3 between the junction point TP4 of a capacitor C and two like constant current sources CS1 and CS2 whose free ends are connected to VAG, VAUX and VAG respectively. The constant current able to be generated by each of CS1 and CS2 is called I2. CS1 and CS2 are controlled by the binary control signals BR and $\overline{BR}$ respectively.

The above mentioned amplifier control input VPA to which a like named control voltage VPA may be applied is connected to the bases of two NPN transistors T9 and T10 via respective resistances R24 and R25. The transistors T9 and T10 are connected in parallel with the amplifiers T1, T2 and T3, T4 respectively.

Preferred values of the resistors R12 to R19 and R23, R24, capacitor C and the currents I1 and I2 are as follows :

| | |
|---|---|
| R12, R13 | : 8 kilo-ohms; |
| R14, R16, R17, R18 | : 50 kilo-ohms; |
| R15, R19 | : 1 kilo-ohm; |
| R24, R25 | : 10 kilo-ohms. |

The current I1 is such that it produces in a resistor R8 or R9 a voltage drop equal to (V+) - 2 v - VEET;

The current I2 is equal 2.35 micro-Ampères.

The above reference and control voltage VREF and VPA are generated in a reference and control voltage circuit which includes two resistive voltage dividers comprising resistors R20, R21 and R22, R23 respectively. Resistors R20 and R21 of the control voltage circuit are connected in series between VAG and V- and their tapping point TP5 is connected to the control output terminal VPA via the base-emitter junctions of NPN transistor T11 and PNP transistor T12. The collector of T11 is directly connected to VAUX and its emitter is connected to V- via the drain-to-source path of NMOS transistor NM4, which is connected in current mirror configuration with NMOS transistors NM5 and NM6 whose drain and gate electrodes are commoned. The source-to-drain path of PMOS transistor PM2, whose gate is controlled by the above mentioned bias voltage B1, and the gate-to-source path of NM6 are connected in series between VAUX and V- so as to form a constant current source able to generate a constant current I3 in the drain electrodes of NM4, NM5 and NM6. The collector of T12 is directly connected to V- and VAUX is connected to the emitter of T12 via the source-to-drain path of PMOS transistor PM3, whose gate is also controlled by the above mentioned bias voltage B1. The emitter-to-collector path of transistor T12 is further shunted by the drain-to-source path of NMOS transistor NM7 whose gate is controlled by the binary control signal $\overline{VPB}$ .

Resistors R22 and R23 of the reference voltage circuit are connected in series between VAG and V- and their tapping point TP6 is connected to the reference output terminal VREF via the base-emitter junctions of NPN transistor T13 and PNP transistor T14. The collector of T13 is connected to VAUX and its emitter is connected to V- via the drain-to-source path of NMOS transistor NM5. The collector of T14 is joined to V-

Preferred values of R20 to R23 are

R20 : 11.5 kilo-ohms;

R21 : 35 kilo-ohms;

R22 : 33.6 kilo-ohms;

R23 : 20 kilo-ohms.

When the circuit is in operative condition the constant bias signal B1 is on 0, whereas the binary control signal VPB is activated or not.

It is first supposed that the binary control signal VPB is de-activated (0) so that the signal $\overline{VPB}$ is de-activated (1). In this case transistor T12 is prevented from being operated since transistor NM7 is then conductive via transistor PM3 which is conductive together with transistor PM2 because the signal B1 is in 0. Due to PM2 being conductive a constant current I3 is able to flow in the drain electrodes of the transistors NM5 and NM6 so that the transistors T13 and T14 are conductive and generate on the output terminal VREF a like named reference voltage VREF equal to

$$VREF = VTP6 - VBET13 + VBET14 \qquad (1)$$

wherein VTP6 is the voltage at the tapping point of the voltage divider R22, R23 and VBET13 and VBET14 are the saturation voltages of T13 and T14 respectively. Because VBET13 is substantially equal to VBET14 the reference voltage VREF is substantially independent from temperature variations although VBET13 and VBET14 are themselves dependent of temperature.

Due to VPB being on 0, transistor PM1 is conductive whereas NM1 is blocked so that transistor T6 is prevented from being operated and that the connection between the bases of T5 and T6 is interrupted. Hence the bias current I4 for the amplifiers T1, T2 and T3, T4 is equal to I1.

Because $\overline{VPB}$ is activated the control signal VPA generated at terminal VPA is de-activated or on 0 because this terminal is connected to V- . As a consequence the transistors T9 and T10 are blocked.

With the above given components values the reference voltage VREF is substantially equal to 2.75 Volts above V- and sufficient to prevent transistor T5 from being saturated.

In case the current source CS2 is operated by the binary control signal $\overline{BR}$ the capacitor C is fully discharged so that the voltage at the junction point TP4 of C, CS1 and CS2 is equal to VAG. As a consequence the input voltage VTP2 at the signal input TP2 of the differential amplifier is given by :

$$VTP2 = VREF + (VAG - v1 - VREF) \cdot \frac{R19}{R18+R19} \qquad (2)$$

wherein v1 is the total voltage drop in the gate-to-source and base-to-emitter paths of NM3 and T8.

On the other hand, the input voltage VTP1 at the signal input TP1 of this amplifier is constant and given by :

$$VTP1 = VREF + (VTP3 - v1 - VREF) \cdot \frac{R15}{R14+R15} \qquad (3)$$

wherein $\quad VTP3 = VAG + (VAUX - VAG) \cdot \frac{R17}{R16+R17} \qquad (4)$

From the above relations (2) to (4) and for the above given resistance values one obtains :

$$VTP2 = VTP1 - \frac{VAUX - VAG}{12} \qquad (5)$$

With the given voltage values and with v1 = 1.7 Volts

$$VTP = VREF + 1.13 \text{ Volts} \qquad (6)$$

$$VTP = VREF + 0.51 \text{ Volts} \qquad (7)$$

As a consequence amplifier T1, T2 is operative, whereas amplifier T3, T4 is blocked so that no current flows in resistor R8, whereas a current flows from VX to V- via the series connection of resistor R9, amplifier T1, T2, transistor T5 and resistor R12. Because VX is at a voltage (V+) - v and since the current I1 produces in resistor R9 a voltage drop equal to (V+) - 2v - VEET the voltage at terminal BR2 is equal to (V+) - v, whilst that at terminal BR1 is equal to VEET + v, as required. Because these voltages are applied to the non-inverting inputs of LOA0 and LOA1 respectively they appear on the respective conductors LI0 and LI1.

In case the current source CS1 is operated by the binary control signal BR, the capacitor C is fully charged so that the voltage at the junction point TP4 of C, CS1 and CS2 is equal to VAUX. As a consequence the input voltage TP2 at the signal input TP2 of the differential amplifier is given by :

$$VTP2 = VREF + (VAUX - v1 - VREF) \cdot \frac{R19}{R18+R19} \qquad (8)$$

From the relations (3), (4), and (8) it follows that

$$VTP2 = VTP1 + \frac{VAUX - VAG}{12} \qquad (9)$$

With the above given voltage value and again with $v1 = 1.7$ Volts one has

$$VTP2 = VREF + 1.75 \text{ Volts} \qquad (10)$$

As a consequence amplifier T3, T4 is operative, whereas amplifier T1, T2 is blocked so that the voltages at the terminals BR2 and BR1 are equal to VEET + v and (V +) - v respectively. Because these voltages are applied to the non-inverting inputs of LOA0 and LOA1 they appear on the respective line conductors LI0 and LI1.

In order to realise a smooth polarity reversal of these line conductors it is sufficient to suitably control the operation of the current sources CS1 and CS2 by means of the binary control signals BR, $\overline{BR}$. For instance, when initially CS2 is operated and CS1 is not so that the line conductor LI0 is at (V+) - v, whilst the line conductor LI1 is at VEET + v, it is sufficient to stop the operation of CS2 and start that of CS1 by making $\overline{BR} = 0$ and BR = 1

Indeed, in this way capacitor C is linearly charged by CS1 from VAG to VAUX at the junction point TP4. As a consequence the voltage VTP2 at the input TP2 of the differential amplifier circuit linearly varies from the value given by the above relation (5) to that given by the relation (9) or from the value given by (7) to that determined by (10). Because the voltage VTP1 at the other input TP1 of this amplifier remains constant and has for instance the value given by relation (7) the amplifier T1, T2 will be gradually blocked whereas amplifier T3, T4 will become gradually operative, as already described in the above reference C. Because the voltage variation at the amplifier input TP2 is small the change of condition of the amplifier circuit is performed relatively rapidly but smoothly so that more than 3 smooth polarity reversals may be performed per second.

Instead of realising smooth polarity reversals one may also perform more abrupt reversals by charging and discharging capacitor C more rapidly. This may be obtained by using constant current sources CS1 and CS2 generating a large current.

In case the binary control signal $\overline{VPB}$ is de-activated, transistors T11 and T12 are conductive so that the control signal VPA generated at terminal VPA is activated. Due to VPB = 1, transistor NM1 is conductive whereas transistor PM1 is blocked so that transistor T6 is branched in parallel with transistor T5. Hence, the bias current I4 for the amplifiers T1, T2 and T3, T4 is equal to 2I1. Due to VPA = 1, the transistors T9 and T10 are conductive so that a current I1 flows through each of them from VX to V-. A a consequence the voltages at the outputs BR1 and BR2 become both equal to VEET + v.

To be noted that except for the capacitor C all other components of the above described circuit are integrated on a chip so that it is possible to use a relatively large capacitor.

From the above it also follows that the condition of VPA prevails i.e. when VPA is activated the amplifiers T1, T2 and T3, T4 cannot become operative.

While the principles of the invention have been described above in connection with specific apparatus, it is to be clearly understood that this description is made only by way of example and not as a limitation on the scope of the invention.

0193244

- 14 -

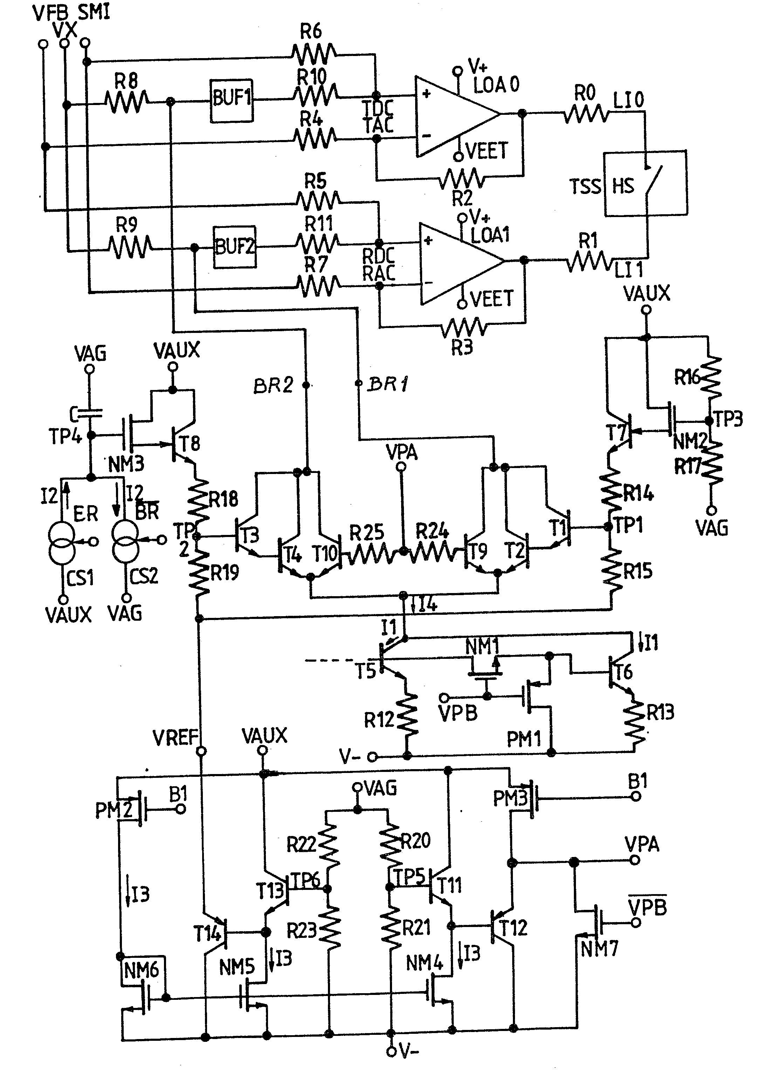

CLAIMS

1. Polarity reversal circuit, e.g. for reversing the polarity of first (LI1) and second (LI0) line conductors of a telecommunication line, including at least one differential amplifier circuit (T1/4) with first (T1/2) and second (T3/4) intercoupled amplifiers having a common bias circuit (T5/6) as well as first (TP1) and second (TP2) inputs, and a signal source (NM2, T7; NM3, T8, C, CS1, CS2) able to apply a constant first voltage to said first input (TP1) and a gradually varying second voltage to said second input (TP2) via at least the gate-to-source path of a first (NM2) and a second (NM3) field effect transistor respectively in order to reverse the polarity of the output signal supplied by the differential amplifier, characterized in that the source electrodes of said first (NM2) and second (NM3) field effect transistors are coupled to a common reference voltage (VREF) via the base-emitter junction of a respective bipolar transistor emitter follower (T7), each in series with a respective emitter resistance (R14 + R15, R18 + R19) a tapping point (TP1/2) of which is connected to a respective input of said differential amplifier (T1/4).

2. Polarity reversal circuit according to claim 1, characterized in that it further includes a reference voltage circuit (R22/R23, T13/14) which provides said common reference voltage (VREF) at its output terminal (VREF) and includes a first resistive voltage divider whose resistance (R22/23) is connected between supply voltages (VAG, V-) and a tapping point (TP6) of which is connected to said output terminal (VREF) via the series connection of the base-emitter junction of third (T15) and fourth (T16) bipolar transistors of opposite conductivity type.

3. Polarity reversal circuit according to claim 2, characterized in that the junction point of the emitter of said third bipolar transistor (T13) and the base of said fourth bipolar transistor (T14) is connected to a constant current branch (NM5) of a first constant current source (NM4/6, PM2).

4. Polarity reversal circuit according to claim 1, characterized in that said signal cource (NM2, T7; NM3, T8, C, CS1/2) includes a capacitance (C) and associated controlled second (CS1) and third (CS2) constant current sources allowing said capacitance (C) to be discharged and charged between respective supply voltages (VAG, VAUX; VAUX, VAG) said variable second voltage being generated at the junction point (TP4) of said capacitance (C) and said second (CS1) and third (CS2) constant current sources.

5. Polarity reversal circuit according to claim 4, characterized in that it is integrated on a chip, except for said capacitance (C) which is located outside said chip.

6. Polarity reversal circuit according to claim 1, characterized in that said signal source (NM2, T7; NM3, T8, C, CS1/2) further includes a second resistive voltage divider whose resistance (R16/17) is connected between supply voltages (VAUX, VAG) and at a tapping point (TP3) of which said constant first voltage is generated.

7. Polarity reversal circuit according to claim 1, characterized in that it includes a single differential amplifier circuit (T1/4) whose first (BR1) and second (BR2) outputs are coupled on the one hand to said first (LI1) and second (LI0) line conductors respectively and on the other hand to a common control terminal (VX) via respective equal resistances (R8/9).

8. Polarity reversal circuit according to claim 1, characterized in that each of said first (NM2) and second (NM3) field effect transistors and the associated said first (T7) and second (T8) bipolar transistors are connected in a respective Darlington configuration (NM2, T7; NM3, T8).

9. Polarity reversal circuit according to claim 1, characterized in that said common bias circuit (T5/T6) includes an emitter follower fifth bipolar transistor (T5) forming a constant current branch of a fourth constant current source.

10. Polarity reversal circuit according to claim 1, characterized in that each of said amplifiers (T1/2, T3/4) is connected in parallel with a respective second amplifier (T9/10) said second amplifiers having a common control terminal (VPA) coupled to the output terminal (VPA) of a control voltage circuit (R20/21, T11/12) which generates a corresponding first control voltage (VPA) at said output terminal, and that said control voltage circuit includes a third resistive voltage divider whose resistance (R20/21) is connected between supply voltages (VAG, V-) and a tapping point of which is connected to said output terminal (VPA) via the series connection of the base-emitter junctions of sixth (T11) and seventh (T12) bipolar transistors of opposite conductivity type.

11. Polarity reversal circuit according to claims 3 and 10, characterized in that the junction point of the emitter of said sixth bipolar transistor (T11) and the base of said seventh bipolar transistor (T12) is connected to another constant current branch (NM4) of said first constant current source (NM4/6, PM2).

12. Polarity reversal circuit according to claim 10, characterized in that it includes a third field effect transistor (NM7) able to shunt said seventh bipolar transistor (T12) under the control of a second control signal ($\overline{VPB}$).

13. Polarity reversal circuit according to claims 9 and 10, characterized in that common bias circuit (T5/6) further includes an emitter follower eigth bipolar transistor (T6) forming another constant current branch of said fourth constant current source (T5/6), said fifth (T5) and eighth (T6) bipolar transistors having directly connected collectors, the bases of said fifth (T5) and eigth (T6) bipolar transistors being able to be interconnected via a fourth field effect transistor (NM1) and the series connection of the base-emitter junction and the emitter resistance (R13) of said eighth bipolar transistor (T6) being able to be shunted by a fifth field effect transistor (PM1), both under the control of said second control signal (VPB) applied to the common gates of said fourth (NM1) and fifth (PM1) field effect transistors.

0193244